# EUROPÄISCHE PATENTSCHRIFT

(11) **EP 3 263 935 B1**
(45) Veröffentlichungstag und Bekanntmachung des Hinweises auf die Patenterteilung: **11.09.2019**
(21) Anmeldenummer: 16176686.0
(22) Anmeldetag: 28.06.2016
(51) Int. Cl.: F16D 1/08, F16D 1/104, F16D 65/12

(54) **BREMSSCHEIBENEINHEIT**
BRAKE DISK UNIT
UNITÉ DE FREINAGE À DISQUE

(43) Veröffentlichungstag der Anmeldung: 03.01.2018
(73) Patentinhaber: Kochsiek, Adolf, 33818 Leopoldshöhe (DE)
(72) Erfinder: Kochsiek, Adolf, 33818 Leopoldshöhe (DE)
(74) Vertreter: Rausch Wanischeck-Bergmann Brinkmann

(56) Entgegenhaltungen:
- EP-A1- 1 225 356
- EP-A2- 1 229 266
- WO-A1-2012/152442
- DE-A1- 3 813 272
- DE-A1-102004 004 456
- DE-A1-102004 056 642
- DE-A1-102009 056 075
- DE-A1-102010 055 379
- DE-U1-202016 102 524
- FR-A1- 2 406 750
- US-A1- 2003 059 233

## Beschreibung

Die vorliegende Erfindung betrifft eine Bremsscheibeneinheit mit einem Reibring und einem Reibringträger, welche mittels einer Welle-Nabe-Verbindung mit einer Passverzahnung mit einer Vielzahl von Mitnehmern verbunden sind.

Gattungsgemäße Bremsscheibeneinheiten, sogenannten Verbundbremsscheiben, sind dem Grunde nach bekannt und im Einsatz. Derartige Systeme werden aufwendig und teuer hergestellt. Üblicherweise wird eine aufwendig hergestellte Verzahnung zwischen Reibring und Reibringträger ausgebildet und mit Zwischenblechen, Stiften und dergleichen eine sichere Drehmomentübertragung gewährleistet. Neben dem aufwendigen Fertigungsvorgang sind Montage und Wartung ebenfalls aufwendig. Herstellungsvorgänge umfassen in der Regel Fräsen, Stoßen, Räumen und so weiter, wobei besonders aufwendig Passungen erzeugt werden müssen.

Passverzahnungen sind im einschlägigen Bereich ebenfalls bekannt. Eine Passverzahnung ist einen Vielfach-Mitnehmerverbindung. Die Drehmomente werden üblicherweise von den Zahnflanken übertragen. Die Welle ist außen verzahnt, die Nabe in innen verzahnt.

Derartige Passverzahnungen sind bekannt als Evolventen-, Parallel- oder Spitzverzahnung, je nach Bildung und Kontur der Zähne.

Sehr verbreitet sind bei herkömmlichen Welle-Nabe-Verbindungen Passfedersteckverzahnungen, runde Passverbindungen oder andere Verbindungen mit Zwischenelementen. Durch die Zwischenelemente soll die für die Drehmomentübertragung erforderliche Berührungskontur sichergestellt werden. Weitere im Stand der Technik bekannte Passverbindungen kennen auch Mitnehmer mit polygonalen Außenkonturen, zu denen beispielsweise die sogenannten H- oder P3G-Profile gehören. Insbesondere bei großen Lasten und großen Bauteilen ergeben sich hier erhebliche Nachteile. Die Verbindungen haben einen vollflächigen Formschluss. Die Kraftübertragung findet an jedem Punkt der Konturnormalen, das heißt rechtwinklig zur Oberflächennormalen statt. Idealerweise sollte, insbesondere bei großen Lasten, der Krafteinleitungswinkel tangential zur Bauteilemitte liegen. Dies ist jedoch bei den bekannten Polygonformen nicht der Fall. Darüber hinaus sind Polygonformen für Mitnehmer schwierig beziehungsweise aufwendig in der Herstellung.

Eine Bremsscheibeneinheit mit den Merkmalen des Oberbegriffes des Anspruchs 1 ist z.B. aus DE 20 2016 102 524 U1 bekannt.

Ausgehend vom vorbeschriebenen Stand der Technik liegt der vorliegenden Erfindung die **Aufgabe** zugrunde, eine Bremsscheibeneinheit der gattungsgemäßen Art bereitzustellen, bei welcher auch bei extremer mechanischer und thermischer Belastbarkeit vorzugsweise ohne Anwendung von Zwischenelementen die Herstellung und Montage wirtschaftlich ist.

Zur technischen **Lösung** dieser Aufgabe wird eine Welle-Nabe-Verbindung mit den Merkmalen des Patentanspruches 1 vorgeschlagen. Weitere Vorteile und Merkmale ergeben sich aus den Unteransprüchen.

Erfindungsgemäß haben die Mitnehmer im Querschnitt eine Kontur, die zumindest teilweise entlang einer verlängerten Trochoide verläuft.

Die Mitnehmer im Querschnitt weisen eine Kontur, das heißt einen Verlauf der Kontur auf, der somit streckenweise oder teilweise entlang einer verlängerten Trochoide verläuft.

Welle-Nabe-Verbindung mit Bezug auf die vorliegende Erfindung umfasst jegliche Verbindung zwischen einem innenliegenden und einem außenliegenden Bauteil zum Zwecke der Drehmomentübertragung. Darunter fallen insbesondere scheibenförmige Naben, das heißt Bremsscheiben.

Eine Zykloide oder auch zyklische Kurve genannt ist eine Bahn, die ein Kreispunkt beim Abrollen eines Kreises auf einer Leitkurve beschreibt. Die Leitkurve kann beispielsweise eine Gerade sein oder auch wiederum ein Kreis. So entstehen zum Beispiel Hypozykloiden oder Epizykloiden, wie auch Hypotrochoiden oder Epitrochoiden. Die typische Hypozykloide bzw. Hypotrochoide entsteht durch einen Punkt P eines Kreises mit dem Radius R, der ohne zu gleiten auf der Innenseite eines anderen Kreises abrollt. Die typische Epizykloide bzw. Epitrochoide entsteht durch einen Punkt P eines Kreises P, der ohne zu gleiten auf der Außenseite eines anderen Kreises abrollt. Der Abstand a des Punktes P vom Mittelpunktes des Radius R ist von Bedeutung. Wenn der Abstand a ungleich dem Radius R ist spricht man von Trochoiden, andernfalls von einer gewöhnlichen Zykloide. Ist a kleiner als R spricht man von verkürzten Trochoiden. Ist a größer als R spricht man von verlängerten Trochoiden.

Gemäß einem vorteilhaften Vorschlag ist die Verbindung axial verpresst, zumindest spielfrei ausgebildet.

Darüber hinaus wird mit besonderem Vorteil angegeben, dass die Verzahnung durch Unrunddrehen hergestellt wird. Dies gilt zumindest für eines der Teile Welle oder Nabe, vorzugsweise aber auch für beide. Hierdurch ergibt sich eine besondere Wirtschaftlichkeit auch bei der Massenproduktion. Ein weiterer Vorteil der vorliegenden Erfindung besteht darin, dass unterschiedliche Materialien kombiniert werden können. Durch die Art der Mitnehmerkontur findet eine optimale Drehmomentübertragung statt, ohne dass zu große Kräfte auf die einzelnen Mitnehmer wirken.

Gemäß einem weiteren vorteilhaften Vorschlag der Erfindung kann der Mitnehmer einen Hinterschnitt aufweisen. Auch sonstige Bereiche, die freigestellt sind, liegen im Rahmen der Erfindung. Freigestellte Bereiche in der Form sind solche, an denen Welle und Nabe keinen Kontakt haben.

Durch die Erfindung wird es ermöglicht, entsprechende Welle-Nabe-Verbindungen ausschließlich durch Drehverfahren herzustellen. Die Kontur entsteht bei der Herstellung mittels Drehverfahren in hoher Präzision mit größtmöglicher Teilung- und Kurvenformgenauigkeit. Teilungsfehler sind praktisch nicht messbar.

Alle Mitnehmer können nach demselben Bearbeitungsverfahren hergestellt werden. Die Form aller Mitnehmer ist identisch, so dass sich das Vermessen auf einen Mitnehmer reduziert. Durch die mathematisch eindeutig definierte Kontur eignet sich die Erfindung für Großserien und kann mit einer vereinfachten Messtechnik überprüft werden.

Die Kraftübertragungsvektoren zeigen eher in Umfangsrichtung und es ergibt sich eine optimierte Einleitung der Kräfte zur Übertragung von Drehmomenten.

Die Erfindung ermöglicht große Freiheitsgrade bei der Konstruktion und Herstellung von Welle-Nabe-Verbindungen. Die Anzahl der Mitnehmer, der Werkzeugflugkreisradius und die Eindringtiefe in das Werkstück sind Fertigungsparameter, die die Erstellung geeigneter Formen ermöglichen.

Die Verbindung lässt sich jeweils für den Einzelfall anpassen und optimieren. Neben der Anzahl der Mitnehmer können deren Breite und Höhe, die Größe der Zwischenräume zwischen den Mitnehmern, innerer und äußerer Funktionsdurchmesser, die Kontaktbereiche zwischen den Mitnehmern von Welle und Nabe der Verbindung sowie der Hinterschnitt variiert werden.

Es haben sich in der Praxis bestimmte Fertigungsparameter als geeignet herausgestellt. So ergab sich für die Anzahl der Mitnehmer einen Bereich zwischen 7 und 70 Mitnehmer, wobei 15 bis 40 als typisch angesehen werden können. Die Mitnehmerbreite liegt vorzugsweise > 8 mm, besonders bevorzugt > 12 mm. Hinsichtlich der Mitnehmerhöhe ergab sich als bevorzugt > als 5 mm besonders bevorzugt > als 8 mm. Der Zwischenraum zwischen den Mitnehmern ist bevorzugt > 3 mm, besonders bevorzugt > 5 mm. Diese Angaben zeigen auch, dass das Verhältnis zwischen Mitnehmer und Zwischenraum in Abhängigkeit von Bauraum und Leistungsanforderung nicht zwingend 1:1 sein muss. Es können beispielsweise 2:1, 2,5:1, aber auch umgekehrt 1:2, 1:2,5 sowie jegliche Zwischenverhältnisse geeignet sein.

Ein Hinterschnitt kann vorzugsweise bis zu mehreren Millimetern betragen, sofern einer ausgebildet ist.

In besonders vorteilhafter Weise besitzen die Mitnehmer alle die gleiche Form.

Es hat sich als vorteilhaft ergeben, einen inneren Funktionsdurchmesser von mindestens 100 mm, bevorzugt 140 mm bis 220 mm auszuwählen und einen äußeren Funktionsdurchmesser bis maximal 400 mm, wobei sich 150 mm bis 300 mm als vorteilhaft erwiesen haben.

Die Herstellung der Kontur mittels Drehverfahren, insbesondere Unrunddrehverfahren, ergibt sich eine große Fertigungspräzision mit größtmöglicher Teilungs- und KurvenformGenauigkeit. Etwaige Teilungsfehler sind nicht messbar. Es ergibt sich auf diese Weise ein hohes gleichmäßiges Tragbildverhalten. Dies bedeutet, dass industriell reproduzierbar Verbindungen herstellbar sind, bei welchen die Kraftübertragungsflächen optimal sind. Während bei bisherigen entsprechenden Welle-Nabe-Verbindungen erst nach längerer Einlaufzeit ein entsprechend gutes Tragbildverhalten entsteht, ist dies bei der vorliegenden Erfindung praktisch unmittelbar gegeben, was die Leistungsfähigkeit grundsätzlich erhöht.

Die Erfindung ermöglicht die Herstellung von Übermaßverbindungen (Pressverbindungen), so dass unterschiedlichen Ausdehnungen von Welle und Nabe keine Kontaktverluste entstehen. Der Hinterschnitt, bei welchem die Oberflächennormalen vorteilhafterweise nach außen zeigen, sorgt dafür, dass die Verbindung nicht abheben kann. Im Falle der Anwendung von Hinterschnitt bei Schiebesitzverbindungen sorgt dieser bei unterschiedlicher Ausdehnung von Welle und Nabe dafür, dass das maximale Spiel in der Verbindung begrenzt wird.

Um das Fügen einer Welle mit einer Nabe zu erleichtern, können sowohl in Welle als auch in Nabe abgestufte Innen- beziehungsweise Außenkonturen zum Einsatz kommen. Dazu werden mindestens zwei Stufen in Welle und Nabe derart dimensioniert, dass im ersten axialen Bereich der Verbindung ein deutliches Spiel vorhanden ist, was den Fügeprozess stark erleichtert. Bevor die Bauteile in der letzten Stufe in Kontakt kommen, hat sich die Verbindung bereits zentriert. Die beiden Bauteile können mit hohem Übermaß gefügt werden, ohne dass die Rund- oder Planlaufqualität beeinträchtigt wird. Im endmontierten Zustand trägt die gesamte Verbindung mit dem vom Design definierten Übermaß, das heißt, die gesamt axiale Länge der Verbindung wird ausgenutzt. Mit dieser Option lässt sich besonders bei hochbelasteten Verbindungen der Bauraum für die Verbindung optimieren, insbesondere wenn für die Funktionalität der Verbindung ein hohes Übermaß erforderlich ist. Mit Hilfe des abgestuften Designs kann auf Erwärmen oder Tiefkühlen bei der Montage verzichtet werden, was einen erheblichen Vorteil darstellt.

Eine erfindungsgemäße Bremsscheibeneinheit weist eine große Anzahl von Vorteilen auf. Reibring und Reibringträger können aus unterschiedlichen Materialien bestehen. In Frage kommen hier Grauguss in Kombination mit Aluminium oder Stahlblech, Keramik und so weiter. Es können Übertragungssektionen ausgebildet werden, die in sich abgeschlossene, eigenständige Drehmomente übertragende Elemente darstellen.

In vorteilhafter Weise kann ein Übermaß zwischen den beiden Bauteilen ausgebildet sein, so dass selbst bei maximaler zu erwartender Temperaturdifferenz zwischen Reibring und Reibringträger noch eine Spielfreiheit gewährleistet ist.

Die Verbindung ist axial nicht verschieblich, wobei gemäß einem vorteilhaften Vorschlag eine Verriegelung gegen axiales Herausziehen vorgesehen sein kann. Um in einen solchen Fall eine axiale Position zu definieren kann gemäß einem vorteilhaften Vorschlag der Erfindung eine Plananlage vorgesehen sein.

Die Herstellung einer Plananlage kann bei gleicher Aufspannung mit der Unrundbearbeitung erfolgen.

Ausnehmungen und Mitnehmer können im Rohling vorgeformt sein und durch Unrundbearbeitung fertiggearbeitet werden. In vorteilhafter Weise werden die Funktionsdurchmesserbereiche in Abhängigkeit von den zu erwartenden Kräften ausgewählt. Gleiches gilt für die Maße Mitnehmerbreite, Zwischenraum, Mitnehmerhöhe und dergleichen.

Gemäß einem weiteren vorteilhaften Vorschlag der Erfindung kann der Reibringträger beispielsweise in Form eines Topfes formend hergestellt werden, so dass er im Verbindungsbereich nicht weiter bearbeitet werden muss.

Aus der axialen Überdeckung zwischen Reibring und Reibringträger ergibt sich ein axialer Bauraum für die Welle-Nabe-Verbindung. Gemäß einem vorteilhaften Vorschlag der Erfindung ist die Welle-Nabe-Verbindung axial kürzer als der Bauraum, in vorteilhafter Weise weniger als 50%.

Mit der Erfindung wird eine neuartige Bremsscheibeneinheit vorgeschlagen. Diese kommt ohne jede Zwischenelemente aus und ist sowohl mechanisch als auch thermisch äußerst belastbar.

Aufgrund der spielfreien Verbindung, die als Übergangspassung, verpresste Verbindung oder auch nur mit sehr geringem Übermaß ausgebildet sein kann, ergibt sich eine sehr große thermische Belastbarkeit. Trotzdem lässt sich die Bremsscheibeneinheit aufgrund der Erfindung mit geringem wirtschaftlichem Aufwand und aufgrund der neuartigen Fertigungsverfahren in sehr kurzer Produktionszeit herstellen.

Weitere Vorteile und Merkmale der Erfindung ergeben sich aus der folgenden Beschreibung anhand der Figuren. Dabei zeigen:
- Fig. 1: eine Draufsicht auf ein Polygonalprofil einer Welle nach dem Stand der Technik;
- Fig. 2: eine Draufsicht auf ein Polygonalprofil einer Welle nach dem Stand der Technik;
- Fig. 3: eine Schnittansicht (schematisiert) eines Ausführungsbeispiels für ein erfindungsgemäßes Welle-Naben-Profil;
- Fig. 4: eine Darstellung nach Fig. 3 mit der Darstellung der Werkzeugflugbahn;
- Fig. 5: eine vergrößerte Darstellung der Normalen bei einem Ausführungsbeispiel für ein erfindungsgemäßes Welle-Nabe-Profil;
- Fig. 6: eine Darstellung gemäß Fig. 5 für ein Ausführungsbeispiel mit Hinterschnitt;
- Fig. 7a: eine Schnittdarstellung einer erfindungsgemäßen Welle;
- Fig. 7b: eine Schnittdarstellung einer erfindungsgemäßen Nabe und
- Fig. 7c: eine Darstellung des Zusammenbaus.

In den Figuren sind gleiche Elemente mit gleichen Bezugszeichen versehen.

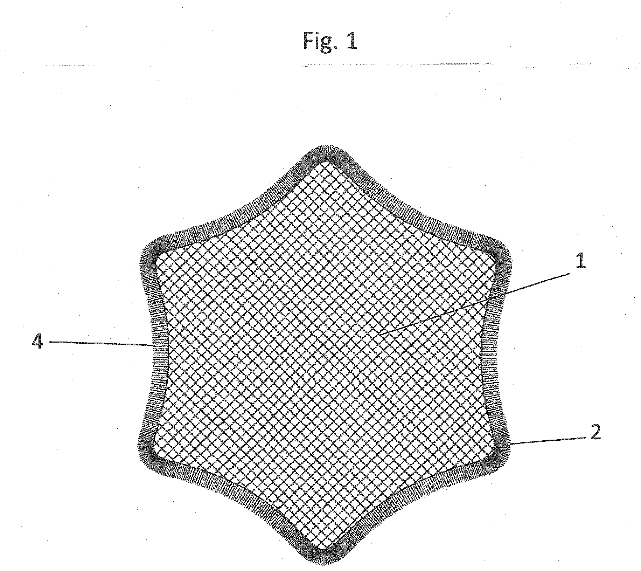

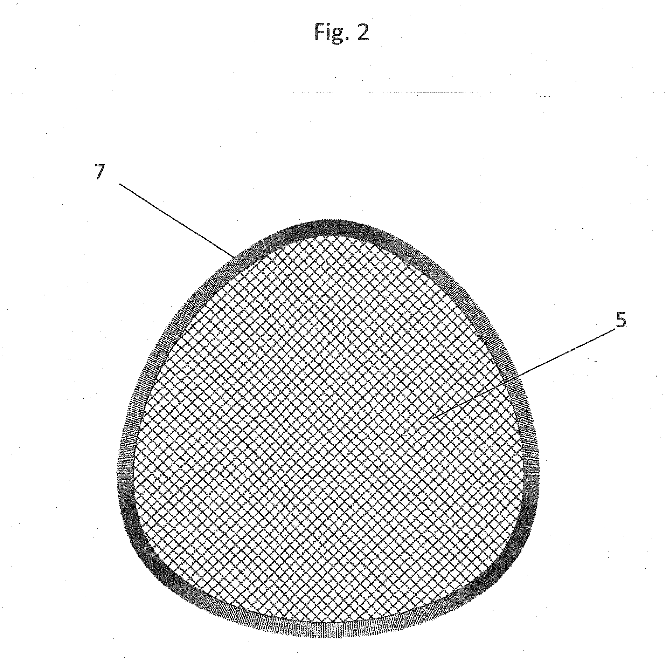

Gemäß Figuren 1 und 2 gibt es, neben den an sich bekannten Standardverzahnungen wie Evolventenverzahnung, Parallelverzahnung oder Spitzverzahnung auch sogenannte polygonale Verzahnungen. Polygonkonturen wie die gezeigten sind im Stand der Technik bekannt. Fig. 1 zeigt beispielhaft ein sogenanntes H6-Profil 1, bei welchem eine Kontur mit sechs Ecken 2 ausgebildet ist. Dieser Querschnitt zur Drehmomentübertragung hat die Oberflächennormale 4.

Gemäß Fig. 2 ist ein sogenannten P3G-Profil gezeigt, bei welchem die Oberflächennormale 7 gebildet ist.

Bei den Figuren 1 und 2 sind die jeweiligen Normalen den gesamten Umfang umlaufend dargestellt. Insbesondere zeigt sich hier der zum Teil für eine Kraftübertragung oder Momentübertragung äußerst ungünstige Verlauf der Normalen.

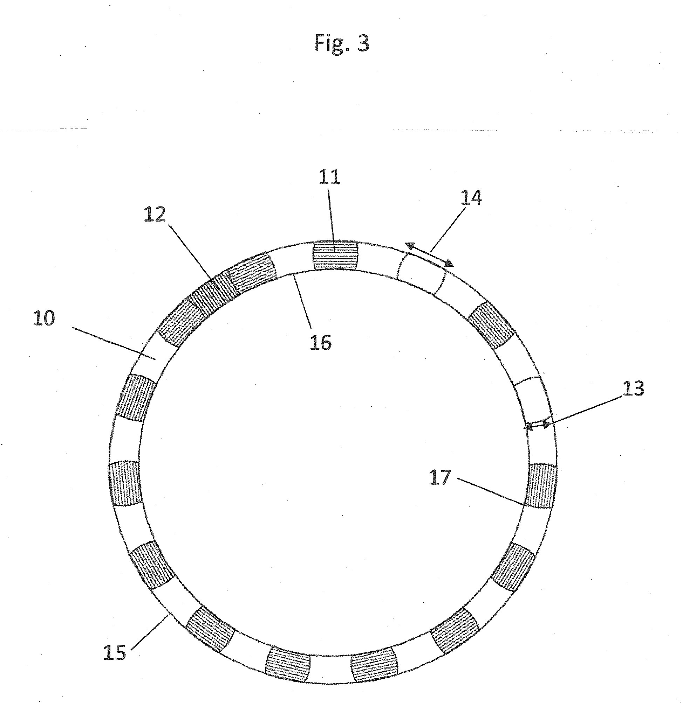

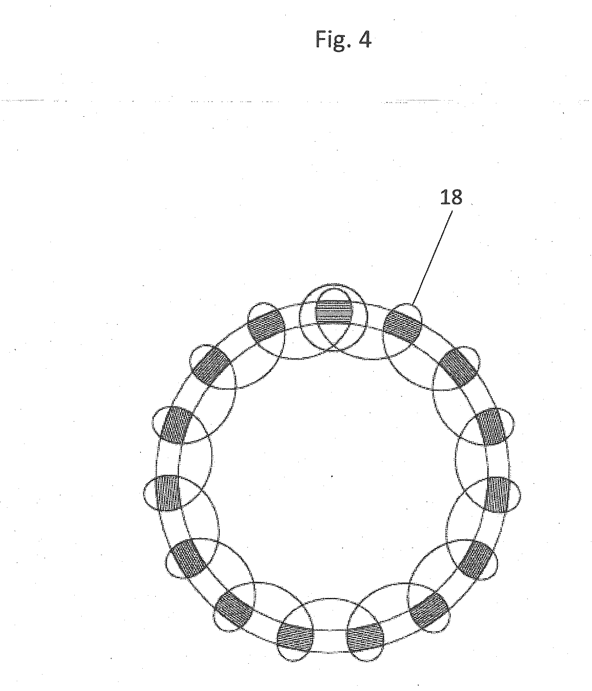

Bei den Figuren 3 und 4 handelt es sich um ein Ausführungsbeispiel für ein Verzahnungsprofil. Das Profil 10 hat Mitnehmer 11 mit einer Mitnehmerhöhe 13 und Zwischenräume 12, in weicher das entsprechende Gegenprofil eingreift. Die Mitnehmer haben die Mitnehmerbreiter 14. Sie liegen zwischen dem inneren Funktionsdurchmesser 16 und dem äußeren Funktionsmesser 15. Im gezeigten Ausführungsbeispiel haben die Mitnehmer einen Hinterschnitt 17, wobei es sich um eine Verjüngung im Bereich der Wurzel handelt. Die Werkzeugflugbahn 18 ist in Figur 4 dargestellt.

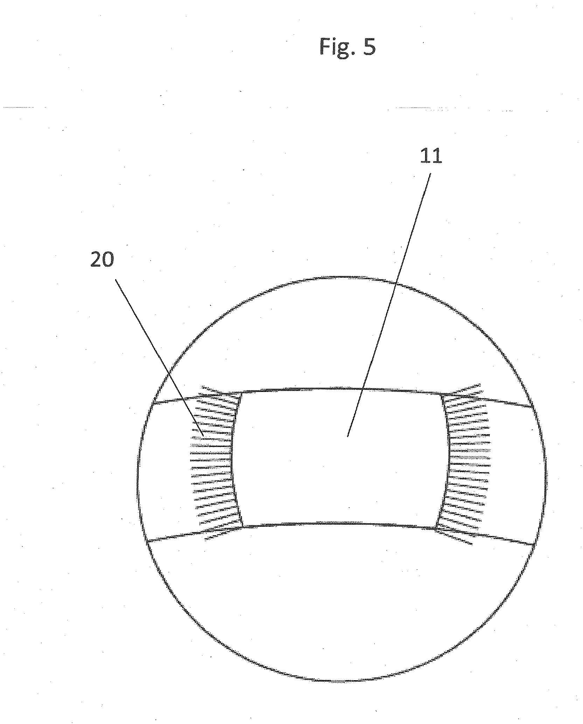

Fig. 5 zeigt eine vergrößerte Darstellung eines Mitnehmers 11 einer Welle-Nabe-Verbindung nach Fig. 3. Der Mitnehmer 11 ist im gezeigten vergrößerten Bild ergänzt durch die Darstellung der Normalen 20, dargestellt durch entsprechende Strahlen auf die Mitnehmeroberfläche. Es zeigt sich, dass hier ein besonders günstiger Normalenverlauf gegeben ist woraus sich eine besondere Eignung für die Übertragung von Kräften und Drehmomenten ergibt.

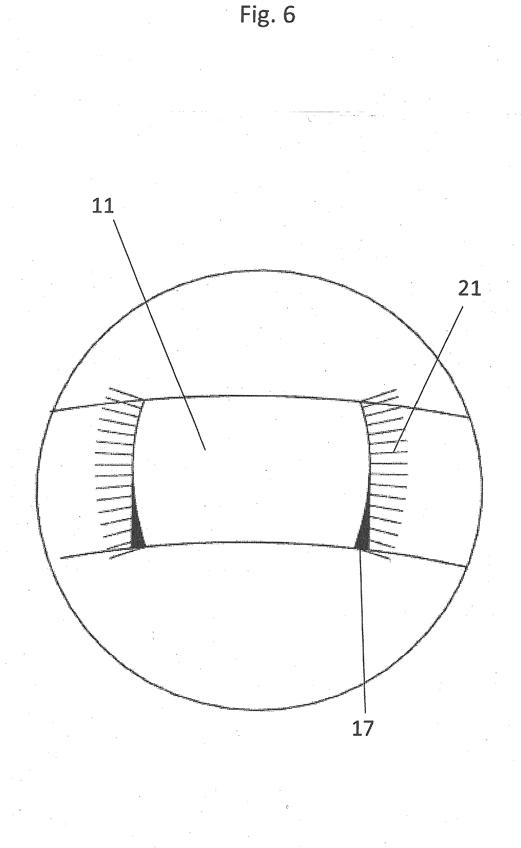

Die in Fig. 6 gezeigte entsprechende Darstellung zeigt einen Mitnehmer 11 sowie die strahlenförmigen Normalen 21. In dieser Darstellung ist der Hinterschnitt 17 besonders markiert. Er ergibt sich aus der Abweichung von einem zumindest geraden oder tangentialen Einlauf des Mitnehmers. Die hinterschnittene Kontur bringt die entsprechend beschriebenen Vorteile mit sich.

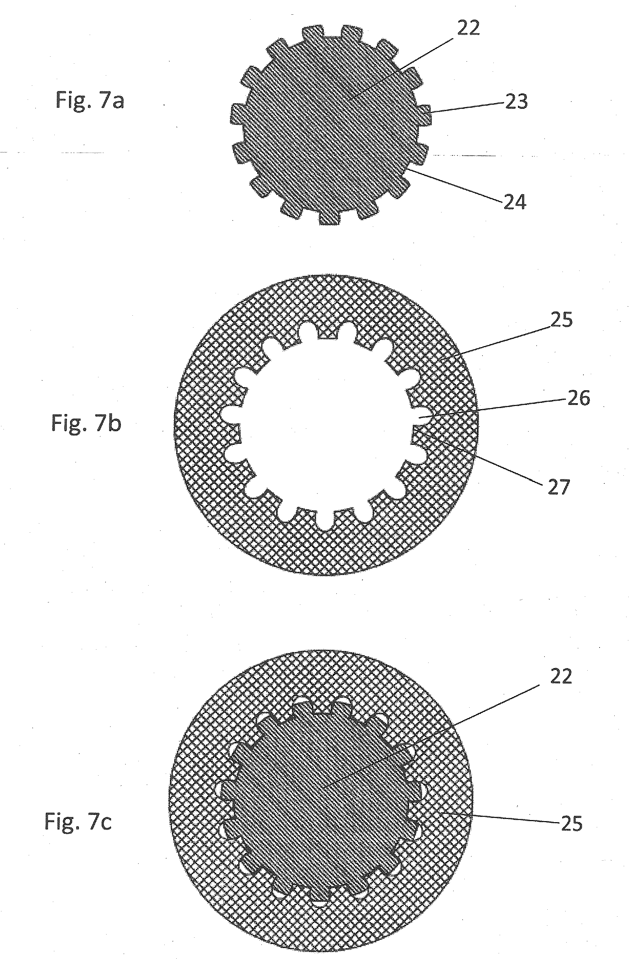

Ein Ausführungsbeispiel für eine erfindungsgemäße Bremsscheibeneinheit ist in den Figuren 7a bis 7c gezeigt. Eine Welle 22 ist mit Mitnehmern 23 versehen, zwischen denen die Zwischenräume 24 verbleiben. Die Mitnehmer 23 haben einen Hinterschnitt im gezeigten Ausführungsbeispiel.

Die in Fig. 7b gezeigte Nabe 25 hat entsprechende Ausnehmungen 26 und Zwischenräume oder Mitnehmer 27.

In der Zusammenfügung ergibt sich das Bild gemäß 7c, wobei sich zeigt, dass die Übertragungskontakte entlang der Normalen optimiert sind.

Das gezeigte Ausführungsbeispiel zeigt beispielsweise eine Bremsscheibe 25 gegenüber einem zentralen Nabenkörper oder Topf 22.

Die beschriebenen Ausführungsbeispiele dienen nur der Erläuterung und sind nicht beschränkend.

### Bezugszeichen

- 1: Polygonprofil
- 2: Ecke
- 4: Normale
- 5: Polygonprofil
- 7: Normale
- 10: Welle-Nabe-Verbindung
- 11: Mitnehmer
- 12: Zwischenraum
- 13: Mitnehmerhöhe
- 14: Mitnehmerbreite
- 15: äußerer Funktionsdurchmesser
- 16: innerer Funktionsdurchmesser
- 17: Hinterschnitt
- 18: Werkzeugflugbahn
- 20: Normale
- 21: Normale
- 22: Welle
- 23: Mitnehmer
- 24: Zwischenraum
- 25: Nabe
- 26: Ausnehmung
- 27: Zwischenbereich

## Patentansprüche

1. Bremsscheibeneinheit mit einem Reibring und einem Reibringträger, welche mittels einer Welle-Nabe-Verbindung mit einer Passverzahnung mit einer Vielzahl von Mitnehmern verbunden sind,
**dadurch gekennzeichnet,**
**dass** die Mitnehmer im Querschnitt eine Kontur aufweisen, die zumindest teilweise entlang einer verlängerten Trochoide verläuft.

2. Bremsscheibeneinheit nach Anspruch 1, **dadurch gekennzeichnet, dass** die verlängerte Trochoide eine verlängerte Hypotrochoide ist.

3. Bremsscheibeneinheit nach Anspruch 1, **dadurch gekennzeichnet, dass** die verlängerte Trochoide eine verlängerte Epitrochoide ist.

4. Bremsscheibeneinheit nach wenigstens einem der vorhergehenden Ansprüche, **dadurch gekennzeichnet, dass** auch Mitnehmer mit anderen Konturen vorhanden sind.

5. Bremsscheibeneinheit nach Anspruch 4, **dadurch gekennzeichnet, dass** die Mitnehmer mit anderen Konturen zu Evolventen-, Parellel- und/oder Spitzverzahnungen gehören.

6. Bremsscheibeneinheit nach einem der vorhergehenden Ansprüche, **dadurch gekennzeichnet, dass** in der Kontur der Mitnehmer kontaktlose Bereiche ausgebildet sind.

7. Bremsscheibeneinheit nach einem der vorhergehenden Ansprüche, **dadurch gekennzeichnet, dass** Welle und Nabe verpresst sind.

8. Bremsscheibeneinheit nach Anspruch 7, **dadurch gekennzeichnet, dass** das Maß für die Verpressung in Abhängigkeit von der zu erwartenden maximalen Temperaturdifferenz zwischen den beiden Bauteilen gewählt ist.

9. Bremsscheibeneinheit nach einem der vorhergehenden Ansprüche, **dadurch gekennzeichnet, dass** wenigstens eine der Verzahnungen durch Unrunddrehen hergestellt ist.

10. Bremsscheibeneinheit nach einem der vorhergehenden Ansprüche, **dadurch gekennzeichnet, dass** Mitnehmer einen Hinterschnitt aufweisen.

11. Bremsscheibeneinheit nach einem der vorhergehenden Ansprüche, **dadurch gekennzeichnet, dass** die Anzahl der Mitnehmer von Welle und Nabe auf der Basis gleicher Grundparameter gebildet sind.

12. Bremsscheibeneinheit nach einem der vorhergehenden Ansprüche, **dadurch gekennzeichnet, dass** Reibring und Reibringträger aus unterschiedlichen Materialien hergestellt sind.

13. Bremsscheibeneinheit nach einem der vorhergehenden Ansprüche, **dadurch gekennzeichnet, dass** die Mitnehmer in Sektionen angeordnet sind.

14. Bremsscheibeneinheit nach Anspruch 13, **dadurch gekennzeichnet, dass** jede einzelne Sektion eine eigenständige drehmomentübertragende Einheit darstellt.

15. Bremsscheibeneinheit nach einem der vorhergehenden Ansprüche, **dadurch gekennzeichnet, dass** die Passverzahnung in axialer Richtung abgestufte Bereiche aufweist.

16. Bremsscheibeneinheit nach einem der vorhergehenden Ansprüche, **dadurch gekennzeichnet, dass** eine Sicherung gegen Axialverschiebung vorgesehen ist.

17. Bremsscheibeneinheit nach einem der vorhergehenden Ansprüche, **dadurch gekennzeichnet, dass** die Passverzahnung nur über einen Teil der axialen Überdeckung beider Bauteile ausgeführt ist.

## Claims

1. Brake disc unit with a friction ring and a friction ring carrier, which are connected by means of a shaft-hub connection with an interference toothing with a plurality of drivers,
**characterized in that** the drivers have a contour in cross-section which runs at least partially along an elongated trochoid.

2. Brake disc unit according to claim 1, **characterized in that** the elongated trochoid is an elongated hypotrochoid.

3. Brake disc unit according to claim 1, **characterized in that** the elongated trochoid is an elongated epitrochoid.

4. Brake disc unit according to at least one of the preceding claims, **characterized in that** there are also drivers with different contours.

5. Brake disc unit according to claim 4, **characterized in that** the drivers with different contours belong to involute, parallel and/or pointed tooth systems.

6. Brake disc unit according to one of the preceding claims, **characterized in that** contactless regions are formed in the contour of the driver.

7. Brake disc unit according to one of the preceding claims, **characterized in that** shaft and hub are pressed together.

8. Brake disc unit according to claim 7, **characterized in that** the measure for the compression is selected as a function of the expected maximum temperature difference between the two components.

9. Brake disc unit according to one of the preceding claims, **characterized in that** at least one of the toothings is produced by non-round turning.

10. Brake disc unit according to one of the preceding claims, **characterized in that** drivers have an undercut.

11. Brake disc unit according to one of the preceding claims, **characterized in that** the number of drivers of shaft and hub are formed on the basis of the same basic parameters.

12. Brake disc unit according to one of the preceding claims, **characterized in that** friction ring and friction ring carrier are made of different materials.

13. Brake disc unit according to one of the preceding claims, **characterized in that** the drivers are arranged in sections.

14. Brake disc unit according to claim 13, **characterized in that** each individual section represents an independent torque-transmitting unit.

15. Brake disc unit according to one of the preceding claims, **characterized in that** the interference toothing has portions stepped in the axial direction.

16. Brake disc unit according to one of the preceding claims, **characterized in that** a securing against axial displacement is provided.

17. Brake disc unit according to one of the preceding claims, **characterized in that** the interference toothing is carried out only over part of the axial overlapping of both components.

## Revendications

1. Unité de freinage à disque de frein avec une bague de friction et un support de bague de friction, qui sont reliés à plusieurs entraîneurs au moyen d'une liaison arbre-moyeu par une denture serrée, **caractérisée en ce**
**que** les entraîneurs présentent, en coupe transversale, un contour qui s'étend le long d'un trochoïde allongé, au moins en partie.

2. Unité de freinage à disque selon la revendication 1, **caractérisée en ce que** le trochoïde allongé est un hypotrochoïde allongé.

3. Unité de freinage à disque selon la revendication 1, **caractérisée en ce que** le trochoïde allongé est un épitrochoïde allongé.

4. Unité de freinage à disque selon au moins l'une des revendications précédentes, **caractérisée en ce qu'**il existe également des entraîneurs avec des contours différents.

5. Unité de freinage à disque selon la revendication 4, **caractérisée en ce que** les entraîneurs ayant des contours différents appartiennent à une denture à développante, parallèle et/ou pointue.

6. Unité de freinage à disque selon l'une des revendications précédentes, **caractérisée en ce que** des zones sans contact sont formées dans le contour de l'entraîneur.

7. Unité de freinage à disque selon l'une des revendications précédentes, **caractérisée en ce que** l'arbre et le moyeu sont assemblés l'un à l'autre par compression.

8. Unité de freinage à disque selon la revendication 7, **caractérisée en ce que** la mesure de la compression est choisie en fonction de la différence de température maximale attendue entre les deux composants.

9. Unité de freinage à disque selon l'une des revendications précédentes, **caractérisée en ce qu'**au moins l'une des dentures est réalisée par tournage non circulaire.

10. Unité de freinage à disque selon l'une des revendications précédentes, **caractérisée en ce que** les entraîneurs présentent une contre-dépouille.

11. Unité de freinage à disque selon l'une des revendications précédentes, **caractérisée en ce que** le nombre d'entraîneurs de l'arbre et du moyeu est constitué sur la base des mêmes paramètres de base.

12. Unité de freinage à disque selon l'une des revendications précédentes, **caractérisée en ce que** la bague de friction et le support de bague de friction sont réalisés dans des matériaux différents.

13. Unité de freinage à disque selon l'une des revendications précédentes, **caractérisée en ce que** les entraîneurs sont disposés en sections.

14. Unité de freinage à disque selon la revendication 13, **caractérisée en ce que** chaque section individuelle représente une unité de transmission de couple indépendante.

15. Unité de freinage à disque selon l'une des revendications précédentes, **caractérisée en ce que** la denture serrée présente des régions étagées dans la direction axiale.

16. Unité de freinage à disque selon l'une des revendications précédentes, **caractérisée en ce qu'**une protection contre le déplacement axial est prévue.

17. Unité de freinage à disque selon l'une des revendications précédentes, **caractérisée en ce que** la denture serrée n'est réalisée que sur une partie du chevauchement axial des deux composants.
